(19) **Europäisches Patentamt**

**European Patent Office**

**Office européen des brevets**

(11) **EP 0 650 946 B1**

(12) **EUROPEAN PATENT SPECIFICATION**

(45) Date of publication and mention
of the grant of the patent:
**24.11.1999 Bulletin 1999/47**

(51) Int. Cl.$^6$: **C04B 35/634**

(21) Application number: **94308007.7**

(22) Date of filing: **31.10.1994**

(54) **Ceramic materials**

Keramische Materialien

Matériaux céramiques

(84) Designated Contracting States:
**DE FR GB IT**

(30) Priority: **01.11.1993 US 146343**

(43) Date of publication of application:
**03.05.1995 Bulletin 1995/18**

(73) Proprietor:
**ROHM AND HAAS COMPANY**
**Philadelphia, Pennsylvania 19106-2399 (US)**

(72) Inventors:
• **Whitman, David William**
**Sumneytown, Pennsylvania 18084 (US)**

• **Wu, Xianliang**
**Dresher, Pennsylvania 19025 (US)**

(74) Representative:
**Buckley, Guy Julian et al**
**ROHM AND HAAS (UK) LTD.**
**European Operations Patent Department**
**Lennig House**
**2 Mason's Avenue**
**Croydon CR9 3NB (GB)**

(56) References cited:
**EP-A- 0 237 273          EP-A- 0 511 429**
**US-A- 4 836 966**

Printed by Xerox (UK) Business Services
2.16.7/3.6

## Description

The present invention is concerned with ceramic materials. In particular, the present invention is concerned with aqueous ceramic slurries, dry ceramic mixtures, ceramic green bodies and sintered ceramic products prepared from such ceramic green bodies, and is especially concerned with a method for improving ceramic green bodies using selected binders. Ceramic green bodies prepared using these selected binders have improved green strength and improved green density.

Ceramic materials are often used to prepare lightweight, strong, thermally and chemically resistant products useful as chromatographic media, grinding aids, abrasives, catalysts, adsorbents, electronic components, construction components and machine components.

In the manufacture of ceramic products, ceramic materials in the form of a powder are subjected to elevated pressures to produce what is known as a ceramic green body. Methods for compacting, or subjecting the ceramic materials to elevated pressures, to produce ceramic bodies include pressing, extrusion, roll compaction and injection molding. Pressing methods include dry pressing, isostatic pressing and semi-wet pressing. Using these methods, ceramic green bodies can be prepared in various shapes and sizes. The size and shape of the green bodies can also be altered by machining, cutting or stamping the green body.

The properties of the green bodies generally affect the properties of the final ceramic product. The final ceramic product is generally prepared by sintering the ceramic green body. If the green density of the ceramic green body is too low, the mechanical properties of the final ceramic product, such as hardness, will diminish. If the green strength of the ceramic green body is too low, it becomes difficult or impossible to process the ceramic green body. Thus, it is desirable to provide ceramic green bodies with increased green densities and green strengths.

One method for increasing green strengths of ceramic green bodies is to use a binder as a processing aid in the preparation of ceramic green bodies. Currently, the primary commercial binders used in the manufacture of ceramic green bodies are polyvinyl alcohol ("PVA") and poly(ethylene glycol) ("PEG"). These binders are somewhat effective at increasing the green strength of ceramic green bodies. However, PEG and PVA suffer from several drawbacks. PEG does not result in particularly good green strength. PVA results in acceptable green strength, but causes a lowering in green density. Also, these polymers are sensitive to changes in humidity. Thus, ceramic green bodies made by processes using these PVA and PEG polymers as binders exhibit variability in green strength, shrinkage and die sticking as the humidity varies. Furthermore, PEG and PVA tend to produce a substantial increase in the viscosity of the ceramic slurries containing them.

One attempt to overcome the problems associated with PEG and PVA is disclosed in US-A-4,968,460 to Thompson, et al. Thompson discloses several classes of emulsion polymers useful as binders for ceramic materials. The classes of suitable emulsion polymers include acrylate esters, SBR type polymers, ethylene vinyl acetates, NBR type polymers, conjugated diolefins, copolymers and homopolymers of vinyl chloride, copolymers of vinylidene chloride and ethylene, and homopolymers of vinyl aromatic compounds. The Tg of the acrylate ester emulsion polymers disclosed by Thompson are preferably from about -30°C to +30°C, most preferably from about -10°C to about 25°C.

Thompson discloses, for example, acrylate binders such Rhoplex B60-A which has a weight average molecular weight of about 500,000. This and the other acrylate binders disclosed by Thompson do not impart the desired characteristics of both increased green strength and improved green density to the ceramic green bodies.

The method of increasing the green strength of ceramic green bodies taught by Thompson requires that the green bodies prepared with the emulsion binder be subjected to an additional energy treatment. Suitable energy treatments for increasing the green strength taught by Thompson include electron beam irradiation, X-ray irradiation, ultraviolet radiation, heating to a temperature of from about 50°C to 200°C and a combination of heat and pressure. These additional treatments will add to the time and cost needed to produce ceramic green bodies having improved green strength.

The present invention seeks to overcome the problems with the previously known methods.

According to a first aspect of the present invention, there is provided an aqueous ceramic slurry which comprises:

(1) from 10 to 90 percent by weight of ceramic particles based on the combined weight of the ceramic particles and water;

(2) from at least 0.5 to 10 percent by weight based on the weight of ceramic particles of one or more emulsion polymers characterised in that the one or more emulsion polmyers is selected from the group consisting of

(i) emulsion polymers having a Tg of from 20°C to 50°C and comprising, as polymerized units:

(a) from 20 to 45 percent by weight of the emulsion polymer of one or more (meth)acrylate ester monomers;

2

(b) from 55 to 80 percent by weight of the emulsion polymer of one or more vinyl or vinylidene aromatic monomers;

(c) from 0 to 10 percent by weight of the emulsion polymer of one or more acid-containing monomers;

(d) from 0 to 10 percent by weight of the emulsion polymer of one or more other copolymerizable monomers;

wherein the total amount of monomers equals 100 percent;

and

(ii) emulsion polymers having a Tg of from 40°C to 55°C and comprising, as polymerized units:

(a) from 65 to 95 percent by weight of the emulsion polymer of one or more (meth)acrylate ester monomers;

(b) from 0 to 10 percent by weight of the emulsion polymer of one or more vinyl or vinylidene aromatic monomers;

(c) from 0 to 15 percent by weight of the emulsion polymer of one or more acid-containing monomers;

(d) from 0 to 10 percent by weight of the emulsion polymer of one or more other copolymerizable monomers;

wherein the total amount of monomers equals 100 percent; and

(3) from 90 to 10 percent by weight of water based on the combined weight of the ceramic particles and water.

According to a second aspect of the present invention, there is provided a dried ceramic mixture, which comprises:

(1) ceramic particles; and

(2) from at least 0.5 to 10 percent by weight based on the weight of ceramic particles, of one or more emulsion polymers characterised in that the one or more emulsion polymers is selected from the group consisting of:

(i) emulsion polymers having a Tg of from 20°C to 50°C and comprising, as polymerized units:

(a) from 20 to 45 percent by weight of the emulsion polymer of one or more (meth)acrylate ester monomers;

(b) from 55 to 80 percent by weight of the emulsion polymer of one or more vinyl or vinylidene aromatic monomers;

(c) from 0 to 10 percent by weight of the emulsion polymer of one or more acid-containing monomers;

(d) from 0 to 10 percent by weight of the emulsion polymer of one or more other copolymerizable monomers;

wherein the total amount of monomers equals 100 percent;

and

(ii) emulsion polymers having a Tg of from 40°C to 55°C and comprising, as polymerized units:

(a) from 65 to 95 percent by weight of the emulsion polymer of one or more (meth)acrylate ester monomers;

(b) from 0 to 10 percent by weight of the emulsion polymer of one or more vinyl or vinylidene aromatic monomers;

(c) from 0 to 15 percent by weight of the emulsion polymer of one or more acid-containing monomers;

(d) from 0 to 10 percent by weight of the emulsion polymer of one or more other copolymerizable monomers; wherein the total amount of monomers equals 100 percent.

According to a third aspect of the present invention, there is provided a ceramic green body, which comprises:

(1) ceramic particles; and

(2) from at least 0.5 to 10 percent by weight based on the weight of ceramic particles of one or more emulsion polymers characterised in that the one or more emulsion polymers is selected from the group consisting of:

(i) emulsion polymers having a Tg of from about 20°C to about 50°C and comprising, as polymerized units:

(a) from 20 to 45 percent by weight of the emulsion polymer of one or more (meth)acrylate ester monomers;

(b) from 55 to 80 percent by weight of the emulsion polymer of one or more vinyl or vinylidene aromatic monomers;

(c) from 0 to 10 percent by weight of the emulsion polymer of one or more acid-containing monomers;

(d) from 0 to 10 percent by weight of the emulsion polymer of one or more other copolymerizable monomers;

wherein the total amount of monomers equals 100 percent;

and

(ii) emulsion polymers having a Tg of from 40°C to 55°C and comprising, as polymerized units:

(a) from 65 to 95 percent by weight of the emulsion polymer of one or more (meth)acrylate ester monomers;

(b) from 0 to 10 percent by weight of the emulsion polymer of one or more vinyl or vinylidene aromatic monomers;

(c) from 0 to 15 percent by weight of the emulsion polymer of one or more acid-containing monomers;

(d) from 0 to 10 percent by weight of the emulsion polymer of one or more other copolymerizable monomers; wherein the total amount of monomers equals 100 percent.

According to a fourth aspect of the present invention, there is provided a sintered ceramic product, which comprises:

(1) heating to an elevated temperature of at least 800°C, preferably at least 1000°C a ceramic green body comprising:

(1) ceramic particles; and

(2) from at least 0.5 to 10 percent by weight based on the weight of ceramic particles of one or more emulsion polymers selected from the group consisting of:

(i) emulsion polymers having a Tg of from 20°C to 50° and comprising, as polymerized units:

(a) from 20 to about 45 percent by weight of the emulsion polymer of one or more (meth)acrylate ester monomers;

(b) from about 55 to 80 percent by weight of the emulsion polymer of one or more vinyl or vinylidene aromatic monomers;

(c) from 0 to 10 percent by weight of the emulsion polymer of one or more acid-containing monomers;

(d) from 0 to 10 percent by weight of the emulsion polymer of one or more other copolymerizable monomers; wherein the total amount of monomers equals 100 percent;

and

(ii) emulsion polymers having a Tg of from 40°C to 55°C and comprising, as polymerized units

(a) from 65 to 95 percent by weight of the emulsion polymer of one or more (meth)acrylate ester monomers;

(b) from 0 to 10 percent by weight of the emulsion polymer of one or more vinyl or vinylidene aromatic monomers;

(c) from 0 to 15 percent by weight of the emulsion polymer of one or more acid-containing monomers;

(d) from 0 to 10 percent by weight of the emulsion polymer of one or more other copolymerizable monomers; wherein the total amount of monomers equals 100 percent; and

(II) maintaining the elevated temperature for at least 10 minutes to form a sintered ceramic product.

According to a fifth aspect of the present invention, there is provided a method for preparing ceramic green bodies, which comprises:

(I) forming an aqueous ceramic slurry comprising:

(1) from about 10 to 90 percent by weight of ceramic particles based on the combined weight of the ceramic particles and water;

(2) from at least 0.5 to 10 percent by weight based on the weight of ceramic particles of one or more emulsion polymers selected from the group consisting of:

(i) emulsion polymers having a Tg of from 20°C to 50°C and comprising, as polymerized units:

(a) from 20 to 45 percent by weight of the emulsion polymer of one or more (meth)acrylate ester monomers;

(b) from 55 to 80 percent by weight of the emulsion polymer of one or more vinyl or vinylidene aromatic monomers;

(c) from 0 to 10 percent by weight of the emulsion polymer of one or more acid-containing monomers;

(d) from 0 to 10 percent by weight of the emulsion polymer of one or more other copolymerizable monomers; wherein the total amount of monomers equals 100 percent;

and

(ii) emulsion polymers having a Tg of from 40°C to 55°C and comprising, as polymerized units

(a) from 65 to 95 percent by weight of the emulsion polymer of one or more (meth)acrylate ester monomers;

(b) from 0 to 10 percent by weight of the emulsion polymer of one or more vinyl or vinylidene aromatic monomers;

(c) from 0 to 15 percent by weight of the emulsion polymer of one or more acid-containing monomers;

(d) from 0 to 10 percent by weight of the emulsion polymer of one or more other copolymerizable monomers; wherein the total amount of monomers equals 100 percent;

(3) from about 90 to 10 percent by weight of water based on the combined weight of the ceramic particles and water;

(II) drying the aqueous ceramic slurry to form a dried ceramic mixture;

(III) and compacting the dried ceramic mixture at an elevated pressure of at least 6.895 M Pa (1,000 psi) to form a ceramic green body.

"Emulsion polymer" as used herein refers to a water-insoluble polymer which is prepared by emulsion polymerization techniques.

"Glass transition temperature", or "$T_g$," as used herein means the temperature at or above which a glassy polymer will undergo segmental motion of the polymer chain. Glass transition temperatures of a polymer can be estimated by the Fox equation [Bulletin of American Physics Society 1, 3, page 123 (1956)] as follows:

$$\frac{1}{T_g} = \frac{w_1}{T_{g(1)}} = \frac{w_2}{T_{g(2)}}$$

For a copolymer, $w_1$ and $w_2$ refer to the weight fraction of the two comonomers and $T_{g(1)}$ and $T_{g(2)}$ refer to the glass transition temperatures of the two corresponding homopolymers. For polymers containing three or more monomers, additional terms are added ($w_n/T_{g(n)}$). The Tg of a polymer can also be measured by various techniques including, for example, differential scanning calorimetry ("DSC").

As used herein, acrylate and methacrylate are referred to as "(meth)acrylate," acrylic acid and methacrylic acid are referred to as "(meth)acrylic acid," and acryloyl and methacryloyl are referred to as "(meth)acryloyl."

Ceramic particles suitable for the present invention include oxide, nitride and carbide ceramics. Examples of suitable ceramic particles include alumina, aluminum nitride, silica, silicon, silicon carbide, silicon nitride, sialon, zirconia, zirconium nitride, zirconium carbide, zirconium boride, titania, titanium nitride, titanium carbide, barium titanate, titanium boride, boron nitride, boron carbide, tungsten carbide, tungsten boride, and oxides of tin, lead, ruthenium, tungsten, yttrium, nickel, magnesium, calcium, and mixtures of two or more of such materials. The morphology of the ceramic particles is not critical but is preferably approximately spherical. The ceramic particles are present in the aqueous ceramic slurry at a level of from 10 to 90, preferably from about 30 to about 80, percent by weight of the aqueous ceramic slurry.

The aqueous ceramic slurry, dried ceramic mixture and ceramic green body also contain one or more emulsion polymers selected from (i) emulsion polymers having a Tg of from 20°C to 50°C and comprising, as polymerized units (a) from 10 to 50 percent by weight of the emulsion polymer of one or more (meth)acrylate esters; (b) from 50 to 90 percent by weight of the emulsion polymer of one or more vinyl or vinylidene aromatic monomers; (c) from 0 to 10 percent by weight of the emulsion polymer of one or more acid-containing monomers; (d) from 0 to 10 percent by weight of the emulsion polymer of one or more other copolymerizable monomers (referred to herein as "group (i) emulsion polymers") and (ii) emulsion polymers having a Tg of from 40°C to 55°C and comprising, as polymerized units (a) from 65 to 95 percent by weight of the emulsion polymer of one or more (meth)acrylate esters; (b) from 0 to 10 percent by weight of the emulsion polymer of one or more vinyl or vinylidene aromatic monomers; (c) from 0 to 15 percent by weight of the emulsion polymer of one or more acid-containing monomers; (d) from 0 to 10 percent by weight of the emulsion polymer of one or more other copolymerizable monomers (referred to herein as "group (ii) emulsion polymers").

The group (i) emulsion polymers useful in the present invention preferably have a Tg of from about 25°C to about 40°C. The group (ii) emulsion polymers useful in the present invention preferably have a Tg of from about 42°C to about 50°C.

The group (i) emulsion polymers useful in the present invention contain, as polymerized units from 10 to 50, preferably from about 20 to about 45, percent by weight of the emulsion polymer of one or more (meth)acrylate esters. The group (ii) emulsion polymers useful in the present invention contain, as polymerized units from about 65 to about 95, preferably from about 70 to about 90 percent by weight of the emulsion polymer of one or more (meth)acrylate esters. Suitable (meth)acrylate esters include, for example, methyl acrylate, ethyl acrylate, propyl acrylate, isopropyl acrylate, butyl acrylate, isobutyl acrylate, secondary butyl acrylate, t-butyl acrylate, pentyl acrylate, neopentyl acrylate, hexyl acrylate, heptyl acrylate, octyl acrylate, isooctyl acrylate, 2-ethylhexyl acrylate, decyl acrylate, isodecyl acrylate, lauryl acrylate, bornyl acrylate, isobornyl acrylate, myristyl acrylate, pentadecyl acrylate, stearyl acrylate, methyl methacrylate, ethyl methacrylate, propyl methacrylate, isopropyl methacrylate, butyl methacrylate, isobutyl methacrylate, hexyl methacrylate, octyl methacrylate, isooctyl methacrylate, decyl methacrylate, isodecyl methacrylate, lauryl methacrylate, bornyl methacrylate, isobornyl methacrylate, myristyl methacrylate, pentadecyl methacrylate, and stearyl methacrylate. Preferred (meth)acrylate esters include methyl acrylate, ethyl acrylate, butyl acrylate, 2-ethylhexyl acrylate, methyl methacrylate, butyl methacrylate, isodecyl methacrylate, and lauryl methacrylate.

The group (i) emulsion polymers useful in the present invention contain, as polymerized units, from 50 to 90, preferably from about 55 to about 80, percent by weight of the emulsion polymer of one or more vinyl or vinylidene monoaromatic monomers. The group (ii) emulsion polymers useful in the present invention contain, as polymerized units, from 0 to 10, preferably from about 0.5 to about 8 percent by weight of the emulsion polymer of one or more vinyl or vinylidene monoaromatic monomers. Suitable vinyl or vinylidene monoaromatic include, for example, styrene, and styrene which is substituted on the aromatic ring with one or more $C_1$-$C_4$ alkyl radicals, hydroxyl radicals, chlorine atoms or bromine atoms. Preferably, the vinyl or vinylidene monoaromatic monomer is styrene, $\alpha$-methyl styrene, chlorostyrene or vinyl phenol, and is most preferably styrene.

The group (i) emulsion polymers useful in the present invention may contain, as polymerized units, up to 10, preferably from about 0.5 to about 7, percent by weight of the emulsion polymer of one or more acid-containing monomers. The group (ii) emulsion polymers useful in the present invention may contain, as polymerized units up to 15, preferably from about 6 to about 12 percent by weight of the emulsion polymer of one or more acid-containing monomers. Suitable acid-containing monomers include ethylenically unsaturated carboxylic acids, phosphonic acids and sulphonic acids, for example, acrylic acid, methacrylic acid, itaconic acid, maleic acid, fumaric acid, phosphoethylmethacrylate, acrylamidomethylpropane sulfonic acid, and the alkali metal and ammonium salts thereof. Preferred acid-containing monomers are acrylic acid, methacrylic acid, and the alkali metal and ammonium salts thereof.

The emulsion polymers useful in the present invention may contain, as polymerized units, up to 10 percent by weight of the emulsion polymer of one or more other copolymerizable monomers. Suitable other copolymerizable monomers include, for example, butadiene, acrylonitrile, ethylene, vinyl acetate, hydroxyalkyl (meth)acrylates, amides of $C_3$-$C_6$ ethylenically unsaturated carboxylic acids, amides of $C_3$-$C_6$ ethylenically unsaturated carboxylic acids which are substituted at the nitrogen by one or two $C_1$-$C_4$ alkyl groups, acrylamide, methacrylamide, and N-methylol(meth)acrylamide. Further examples of suitable other copolymerizable monomers are adhesion promoting monomers such as those described in US-A-2,871,223 herein incorporated by reference.

The emulsion polymers useful in the present invention may, for example, have a weight average molecular weight ("Mw") of from 30,000 to 300,000, preferably from about 50,000 to about 200,000, and most preferably from about 70,000 to about 150,000.

Emulsion polymers having Mw below about 250,000 are generally considered low molecular weight emulsion polymers. One technique for preparing low molecular weight emulsion polymers is by using an increased amount of initiator. Another technique for preparing low molecular weight emulsion polymers is by incorporating into the monomer mixture one or more chain terminating or chain transfer agents. Suitable chain terminating agents and chain transfer agents are well known to those skilled in the art of emulsion polymerization including, for example, mercaptans. When preparing low molecular weight polymers, crosslinking agents should be avoided because the presence of crosslinking agents, such as compounds having two or more sites of $\alpha$-$\beta$-unsaturation, results in a dramatic increase in the molecular weight of the resulting polymer.

Other aspects of emulsion polymerization, such as the selection and levels of emulsifier, initiators, processing conditions (temperature, pressure, feed rates, stirring), pH and the like are within the ordinary skill of persons skilled in the art of emulsion polymerization and do not form a part of the present invention.

The particle size of the emulsion polymers useful in the present invention is preferably relatively small, from 30 nanometers (nm) to 225 nm, preferably from about 40 nm to about 120 nm. As is well-known, given the same polymer backbone, particle size is controlled primarily by the type and level of the emulsifier used.

The emulsion polymers may be used as an emulsion or as a dried powder. Preferably, the emulsion polymer is used as an emulsion. The one or more emulsion polymers are used in an amount which provides a polymer solids level of from about 0.5 to about 10, most preferably from about 1 to about 8, percent by weight, based on the weight of the ceramic material in the aqueous ceramic slurry.

The emulsions useful in the present invention preferably have a level of polymers solids from about 20 percent to about 70 percent, most preferably from about 25 percent to about 65 percent, by weight based on the total weight of the emulsion.

The aqueous ceramic slurry preferably contains water at a level of from about 70 to about 20 percent by weight of the aqueous ceramic slurry.

In addition, the aqueous ceramic slurry, the dried ceramic mixture, and ceramic green bodies may contain one or more conventional ceramic processing aids or other conventional additives. The one or more conventional ceramic processing aids or other conventional additives may be added to the aqueous ceramic slurry or the dried ceramic mixture, but are preferably added to the aqueous ceramic slurry. Conventional processing aids and additives include, for example, other binders, plasticizers, dispersants, lubricants, biocides, sintering aids and foam suppressants. If used, the one or more conventional processing aids or other conventional additives may be present at a level of up to about 10, preferably from about 0.1 to about 5, percent by weight, based on the weight of the one or more ceramic particles.

The aqueous ceramic slurry may be dried by any conventional method such as by tumble drying, pan drying, oven drying, microwave drying or spray drying to produce a dried ceramic mixture. Preferably the aqueous ceramic slurry is dried by spray drying. Spray drying the aqueous ceramic slurry containing the one or more binders and, optionally one or more other conventional additives, will result in a spray dried ceramic mixture. Most preferably, the aqueous ceramic slurry is spray dried to produce a spray dried ceramic mixture which is a free flowing powder wherein the powder particles have an average diameter of from about 10 microns to about 300 microns.

Preferably the ceramic material is present in the dried ceramic mixture at a level of from about 80 to about 99.5 percent by weight of the dried ceramic mixture. Preferably the binder is present in the dried ceramic mixture at a level of from at least about 1 to about 8 percent by weight based on the weight of ceramic material.

To form a ceramic green body, the dried ceramic mixture is compacted. Methods for compacting, or subjecting the ceramic materials to elevated pressures, to produce ceramic bodies include pressing, extrusion, roll compaction and injection molding. Pressing methods include dry pressing, isostatic pressing and semi-wet pressing. Preferably the ceramic green body is formed from the dried ceramic mixture by dry pressing at room temperature at a pressure of at least 6.895 M Pa [1,000 pounds per square inch ("psi")], most preferably from about 13.79 to about 344.75 M Pa (about 2,000 to about 50,000 psi). The resulting green body preferably has a green strength of at least about 0.2, most preferably at least about 0.4, megaPascals ("MPa").

To form a final ceramic product, the green body is fired, or sintered. The preferred temperature and time needed to sinter a green body to form a final ceramic product is partly dependent upon the type of ceramic used to make the ceramic green body. In general, it is preferred to sinter the ceramic green body to make the final ceramic product by heating the ceramic green body to a temperature of at least about 800°C, preferably at least 1,000°C, most preferably from about 1,000°C to about 2,000°C, preferably for from about 5 minutes to about 5 hours, most preferably for from about 10 minutes to about 60 minutes.

Some embodiements of the present invent will now be described in detail in the following Examples.

EXAMPLES

Polymers were evaluated as binders for ceramic materials in the following manner:

To a 00-ball mill jar was added 100 grams of alumina grinding media [approximately 1.27 cm x 1.27 cm cylinders (approximately 1/2 inch x 1/2 inch cylinders)], 60 grams of Alcoa A-16SG alumina having a mean particle size of 0.5 microns, approximately 25 grams of deionized water and an aqueous dispersant solution in an amount to provide 0.18 grams of the dispersant. The dispersant used was an ammonium salt of poly(acrylic acid). The ball mill jar was sealed and the contents were milled for 30 minutes at about 84 revolutions per minute. The ball mill jar was opened and polymer was added in an amount to provide 1, 2, 3 or 5 percent by weight of polymer solids based on the weight of alumina. Deionized water was added in an amount which provided a total weight (the weight of the alumina, water, dispersant, and polymer emulsion) of 100 grams. The ball mill jar was sealed and the contents were milled for 10-15 minutes. The ball mill jar was opened and the aqueous ceramic slurry was decanted to separate it from the grinding media. The aqueous ceramic slurry was spray dried using a Buchi model 190 laboratory spray drier using air as the carrier gas. The drier was fitted with a nozzle having a 0.7 millimeter orifice. The nozzle pressure was 0.48 M Pa (70 pounds per square inch), the inlet temperature was 125°C and the outlet temperature was 70°C. The spray dried ceramic powders were equilibrated by storing them in 51 percent relative humidity dessicators for at least 72 hours.

A 1.27 cm (0.5 inch) diameter hardened steel die with polished surfaces was lubricated with a solution of 2 percent by weight stearic acid and 98 percent by weight acetone. Excess lubricant was removed by buffing. A 1.0 gram sample of equilibrated spray dried ceramic powder was loaded into the die and compacted for 15 seconds to a pressure of 34.48 M Pa (5,000 psi) to form a ceramic green body.

The green strength of the ceramic green bodies was evaluated by measuring the green tensile strength using a diametrical compression test. Green tensile strength was calculated by the following formula:

$$\sigma_F = \frac{2 \cdot p}{\pi \cdot D \cdot l}$$

where $\sigma_F$ is the tensile strength, p is the applied load at failure, D is the diameter of the sample and l is the thickness of the sample. Diametrical compression tests were conducted to determine the applied load at failure using a Soiltest G-900 Versa-loader equipped with a 22.68 kg (50 pound) electronic force guage (available from Ametek) operated at a loading rate of 0.013 cm (0.005 inches) per minute until the sample fractured. The green strength ("G.S.") reported in the tables below are the average of at least three measurements reported in MPa.

The densities of the ceramic green bodies reported in the tables below are the corrected relative green densities ("G.D.") based on an average of four measurements. The corrected relative green density ("$\rho_{corr.rel.}$") is the ratio of the corrected green density ("$\rho_{corrected}$") to the maximum theoretical density ("$\rho_{max}$"). The corrected relative green density was calculated in the following manner:

$$mass/volume = \rho_{measured}$$

$$\rho_{measured} \times (1-k) = \rho_{corrected}$$

$$\rho_{corr.rel.} = \frac{\rho_{corrected}}{\rho_{max}}$$

where k is the percent by weight of binder relative to the weight of the green body.

The following polymers appearing in Table I below were evaluated as binders for alumina according to the above procedure. The polymers had the following compositions and properties (summarized in Table I, below):

Group (i) Emulsion Polymer:
monomer composition- 33 percent by weight ethylhexylacrylate ("EHA"), 3 percent by weight acrylic acid ("AA"), 63 percent by weight styrene ("Sty"), 1 percent by weight ethyleneureamethacrylate ("EUMA"); Tg(as measured by DSC) 29°C; Mw 105,000.
Group (ii) Emulsion Polymer:
monomer composition- 34 percent by weight EHA, 55 percent by weight methylmethacrylate ("MMA"), 8 percent by weight methacrylic acid ("MAA"), 3 percent by weight Sty; Tg (as measured by DSC) 43°C; Mw 96,100.
Airvol 205:
monomer composition- poly(vinyl alcohol) sold by Air Products; Tg (as measured by DSC) 70-75°C; believed to have Mw between 35,000 and 50,000;
Carbowax 20M:
monomer composition- poly(ethylene glycol) sold by Union Carbide; Tg (as measured by DSC) 60-65°C; believed to have a molecular weight of about 18,000.
Rhoplex B-60A:
monomer composition- 66 percent by weight ethylacrylate ("EA"), 33 percent by weight MMA, 1 percent by weight MAA;

Tg (as measured by DSC) 3°C; Mw 500,000, sold by Rohm and Haas Company.

Emulsion Polymer A:

monomer composition- 33 percent by weight isodecylmethacrylate ("IDMA"), 64 percent by weight ethylmethacrylate ("EMA"), 3 percent by weight MAA; Tg (as measured by DSC) 25°C; Mw 271,000.

Emulsion Polymer B:

monomer composition- 33 percent by weight IDMA, 64 percent by weight EMA, 3 percent by weight MAA; Tg (as measured by DSC) 38°C; Mw 99,000.

Emulsion Polymer C:

monomer composition- 15 percent by weight IDMA, 82 percent by weight EMA, 3 percent by weight MAA; Tg (as measured by DSC) 60°C; Mw 89,700.

TABLE I

| Sample | Composition | Tg | Mw |
|--------|-------------|-----|-----|
| Group (i) | 33 EHA/63Sty/3AA/1EUMA | 29°C | 105,000 |
| Group (ii) | 34EHA/3Sty/55MMA/8MAA | 43°C | 96,100 |
| Airvol 205 | 100PVA | 70-75°C | 35,000-50,000 |
| Carbowax 20M | 100PEG | 60-65°C | 18,000 |
| Rhoplex B-60A | 66EA/33MMA/1MAA | 3°C | ~500,000 |
| Emulsion Polymer A | 33IDMA/64EMA/3MAA | 25°C | 271,000 |
| Emulsion Polymer B | 33IDMA/64EMA/3MAA | 38°C | 99,000 |
| Emulsion Polymer C | 15IDMA/82EMA/3MAA | 60°C | 89,700 |

The results of the evaluation of the polymers appearing in Table I as binders for alumina are reported in Table II, below. The "level" reported in Table II is the weight of polymer solids as a percentage of the weight of alumina.

TABLE II

| SAMPLE | LEVEL | G.S. | G.D. |
|--------|-------|------|------|
| Group (i) Emulsion Polymer | 1 | 0.44 | 0.545 |
| Group (ii) Emulsion Polymer | 1 | 0.31 | 0.53 |
| Rhoplex B-60A | 1 | 0.31 | 0.530 |
| Airvol 205 | 1 | 0.35 | 0.520 |
| Carbowax 20M | 1 | 0.30 | 0.537 |
| Group (i) Emulsion Polymer | 2 | 0.62 | 0.542 |
| Group (ii) Emulsion Polymer | 2 | 0.57 | 0.511 |
| Rhoplex B-60A | 2 | 0.41 | 0.522 |
| Airvol 205 | 2 | 0.58 | 0.499 |
| Carbowax 20M | 2 | 0.33 | 0.532 |
| Emulsion Polymer A | 2 | 0.50 | 0.52 |
| Emulsion Polymer B | 2 | 0.39 | 0.52 |
| Emulsion Polymer C | 2 | 0.36 | 0.52 |
| Group (i) Emulsion Polymer | 3 | 0.79 | 0.535 |
| Group (ii) Emulsion Polymer | 3 | 0.64 | 0.51 |
| Rhoplex B-60A | 3 | 0.54 | 0.512 |

TABLE II (continued)

| SAMPLE | LEVEL | G.S. | G.D. |
|---|---|---|---|
| Airvol 205 | 3 | 0.62 | 0.484 |
| Carbowax 20M | 3 | 0.36 | 0.522 |
| Group (i) Emulsion Polymer | 5 | 1.18 | 0.509 |
| Group (ii) Emulsion Polymer | 5 | 0.86 | 0.49 |
| Rhoplex B-60A | 5 | 0.61 | 0.504 |
| Airvol 205 | 5 | 0.92 | 0.459 |
| Carbowax 20M | 5 | 0.41 | 0.500 |

The data in Table II show the improved balance of properties, green strength and corrected relative green density of ceramic green bodies prepared with group (i) or group (ii) emulsion polymers.

"Rhoplex, "Airvol", "Carbowax" and "Soiltest" are trademarks which may be registered in one or more of the designated countries.

## Claims

1.  An aqueous ceramic slurry which comprises:

    (1) from 10 to 90 percent by weight of ceramic particles based on the combined weight of the ceramic particles and water;
    (2) from 90 to 10 percent by weight of water based on the combined weight of the ceramic particles and water; and
    (3) from at least 0.5 to 10 percent by weight, based on the weight of ceramic particles, of one or more emulsion polymers characterised in that the one or more emulsion polymers is selected from the group consisting of:

    (i) emulsion polymers having a Tg of from 20°C to 50°C and comprising, as polymerized units:

    (a) from 20 to about 45 percent by weight of the emulsion polymer of one or more (meth)acrylate ester monomers;
    (b) from 55 to 80 percent by weight of the emulsion polymer of one or more vinyl or vinylidene aromatic monomers;
    (c) from 0 to 10 percent by weight of the emulsion polymer of one or more acid-containing monomers;
    (d) from 0 to 10 percent by weight of the emulsion polymer of one or more other copolymerizable monomers;
    wherein the total amount of monomers equals 100 percent;

    and
    (ii) emulsion polymers having a Tg of from 40°C to 55°C and comprising, as polymerized units

    (a) from 65 to 95 percent by weight of the emulsion polymer of one or more (meth)acrylate ester monomers;
    (b) from 0 to 10 percent by weight of the emulsion polymer of one or more vinyl or vinylidene aromatic monomers;
    (c) from 0 to 15 percent by weight of the emulsion polymer of one or more acid-containing monomers;
    (d) from 0 to 10 percent by weight of the emulsion polymer of one or more other copolymerizable monomers;
    wherein the total amount of monomers equals 100 percent.

2.  A method for preparing ceramic green bodies, which comprises:

    (I) forming an aqueous ceramic slurry as defined in claim 1;
    (II) drying the aqueous ceramic slurry to form a dried ceramic mixture;
    (III) and compacting the dried ceramic mixture at an elevated pressure of at least 6.895 M Pa (1,000 psi) to form a ceramic green body.

3. A dried ceramic mixture, which comprises:

(1) ceramic particles; and
(2) from at least 0.5 to 10 percent by weight based on the weight of ceramic particles of one or more emulsion polymers characterised in that the one or more emulsion polymers is selected from the group consisting of:

(i) emulsion polymers having a Tg of from 20°C to 50°C comprising, as polymerized units

(a) from 20 to 45 percent by weight of the emulsion polymer of one or more (meth)acrylate ester monomers;
(b) from 55 to 80 percent by weight of the emulsion polymer of one or more vinyl or vinylidene aromatic monomers;
(c) from 0 to 10 percent by weight of the emulsion polymer of one or more acid-containing monomers;
(d) from 0 to 10 percent by weight of the emulsion polymer of one or more other copolymerizable monomers;
wherein the total amount of monomers equals 100 percent;

and
(ii) emulsion polymers having a Tg of from 40°C to about 55°C and comprising, as polymerized units

(a) from 65 to 95 percent by weight of the emulsion polymer of one or more (meth)acrylate ester monomers;
(b) from 0 to 10 percent by weight of the emulsion polymer of one or more vinyl or vinylidene aromatic monomers;
(c) from 0 to 15 percent by weight of the emulsion polymer of one or more acid-containing monomers;
(d) from 0 to 10 percent by weight of the emulsion polymer of one or more other copolymerizable monomers; wherein the total amount of monomers equals 100 percent.

4. A ceramic green body, which comprises:

(1) ceramic particles; and
(2) from at least 0.5 to 10 percent by weight based on the weight of ceramic particles of one or more emulsion polymers characterised in that the one or more emulsion polymers is selected from the group consisting of

(i) emulsion polymers having a Tg of from 20°C to 50°C comprising, as polymerized units

(a) from 20 to 45 percent by weight of the emulsion polymer of one or more (meth)acrylate ester monomers;
(b) from 55 to 80 percent by weight of the emulsion polymer of one or more vinyl or vinylidene aromatic monomers;
(c) from 0 to 10 percent by weight of the emulsion polymer of one or more acid-containing monomers;
(d) from 0 to 10 percent by weight of the emulsion polymer of one or more other copolymerizable monomers;
wherein the total amount of monomers equals 100 percent;

and

(ii) emulsion polymers having a Tg of from 40°C to 55°C and comprising, as polymerized units:

(a) from 65 to 95 percent by weight of the emulsion polymer of one or more (meth)acrylate ester monomers;
(b) from 0 to 10 percent by weight of the emulsion polymer of one or more vinyl or vinylidene aromatic monomers;
(c) from 0 to 15 percent by weight of the emulsion polymer of one or more acid-containing monomers;
(d) from 0 to 10 percent by weight of the emulsion polymer of one or more other copolymerizable monomers; wherein the total amount of monomers equals 100 percent.

5. A method of preparing a sintered ceramic product, which comprises:

(I) heating to an elevated temperature of at least 800°C, preferably at least 1000°C, a ceramic green body as claimed in claim 4; and
(II) maintaining the elevated temperature for at least 10 minutes to form a sintered ceramic product.

6. An aqueous ceramic slurry as claimed in claim 1, a method as claimed in claim 2 or claim 5, a dried ceramic mixture as claimed in claim 3, or a green ceramic body as claimed in claim 4, wherein the ceramic particles are particles of alumina, aluminum nitride, silica, silicon, silicon carbide, silicon nitride, sialon, zirconia, zirconium nitride, zirconium carbide, zirconium boride, titania, titanium nitride, titanium carbide, barium titanate, titanium boride, boron nitride, boron carbide, tungsten carbide, tungsten boride, and oxides of tin, lead, ruthenium, tungsten, yttrium, nickel, magnesium, calcium, and mixtures of two or more of such materials.

7. An aqueous ceramic slurry as claimed in claim 1, a method as claimed in claim 2 or claim 5, a dried ceramic mixture as claimed in claim 3, or a green ceramic body as claimed in claim 4, wherein the emulsion polymer(s) has/have a weight average molecular weight of from 30,000 to 300,000.

8. An aqueous ceramic slurry as claimed in claim 1, a method as claimed in claim 2 or claim 5, a dried ceramic mixture as claimed in claim 3, or a green ceramic body as claimed in claim 4, wherein the emulsion polymer(s) has/have a particle size of from 30 nanometers to 225 nanometers.

**Patentansprüche**

1. Wäßrige keramische Aufschlämmung, umfassend

(1) 10 bis 90 Gew.-% keramische Teilchen, basierend auf dem vereinigten Gewicht der keramischen Teilchen und Wasser;
(2) 90 bis 10 Gew.-% Wasser, basierend auf dem vereinigten Gewicht der keramischen Teilchen und Wasser; und
(3) mindestens 0,5 bis 10 Gew.-%, basierend auf dem Gewicht der keramischen Teilchen, von einem oder mehreren Emulsionspolymeren, dadurch gekennzeichnet, daß das eine oder die mehreren Emulsionspolymere ausgewählt sind aus der Gruppe, bestehend aus:

(i) Emulsionspolymeren mit einer Tg von 20°C bis 50°C und umfassend als polymerisierte Einheiten:

(a) 20 bis etwa 45 Gew.-% des Emulsionspolymers von einem oder mehreren (Meth)acrylatestermonomeren;
(b) 55 bis 80 Gew.-% des Emulsionspolymers von einem oder mehreren aromatischen Vinyl- oder Vinyliden-Monomeren;
(c) 0 bis 10 Gew.-% des Emulsionspolymers von einem oder mehreren säureenthaltenden Monomeren;
(d) 0 bis. 10 Gew.-% des Emulsionspolymers von einem oder mehreren anderen copolymerisierbaren Monomeren;
wobei die Gesamtmenge der Monomere gleich 100 % ist, und

(ii) Emulsionspolymeren mit einer Tg von 40°C bis 55°C und umfassend als polymerisierte Einheiten:

(a) 65 bis 95 Gew.-% des Emulsionspolymers von einem oder mehreren (Meth)acrylatestermonomeren;
(b) 0 bis 10 Gew.-% des Emulsionspolymers von einem oder mehreren aromatischen Vinyl- oder Vinyliden-Monomeren;
(c) 0 bis 15 Gew.-% des Emulsionspolymers von einem oder mehreren säureenthaltenden Monomeren;
(d) 0 bis 10 Gew.-% des Emulsionspolymers von einem oder mehreren anderen copolymerisierbaren Monomeren;
wobei die Gesamtmenge der Monomere gleich 100 Prozent ist.

2. Verfahren zur Herstellung von keramischen Grünkörpern, umfassend:

(I) Herstellen einer wäßrigen keramischen Aufschlämmung nach Anspruch 1,

(II) Trocknen der wäßrigen keramischen Aufschlämmung zu einem getrockneten keramischen Gemisch,
(III) und Verdichten des getrockneten keramischen Gemisches bei hohem Druck von mindestens 6,895 MPa (1000 Psi) zu einem keramischen Grünkörper.

3. Getrocknetes keramisches Gemisch, umfassend:

(1) keramische Teilchen und
(2) mindestens 0,5 bis 10 Gew.-%, basierend auf dem Gewicht der keramischen Teilchen, von einem oder mehreren Emulsionspolymeren, dadurch gekennzeichnet, daß das eine oder die mehreren Emulsionspolymere ausgewählt sind aus der Gruppe, bestehend aus:

(i) Emulsionspolymeren mit einer Tg von 20°C bis 50°C, umfassend als polymerisierte Einheiten:

(a) 20 bis 45 Gew.-% des Emulsionspolymers von einem oder mehreren (Meth)acrylatestermonomeren;
(b) 55 bis 80 Gew.-% des Emulsionspolymers von einem oder mehreren aromatischen Vinyl- oder Vinyliden-Monomeren;
(c) 0 bis 10 Gew.-% des Emulsionspolymers von einem oder mehreren säureenthaltenden Monomeren;
(d) 0 bis 10 Gew.-% des Emulsionspolymers von einem oder mehreren anderen copolymerisierbaren Monomeren;
wobei die Gesamtmenge der Monomere gleich 100 % ist, und

(ii) Emulsionspolymeren mit einer Tg von 40°C bis etwa 55°C und umfassend als polymerisierte Einheiten:

(a) 65 bis 95 Gew.-% des Emulsionspolymers von einem oder mehreren (Meth)acrylatestermonomeren;
(b) 0 bis 10 Gew.-% des Emulsionspolymers von einem oder mehreren aromatischen Vinyl- oder Vinyliden-Monomeren;
(c) 0 bis 15 Gew.-% des Emulsionspolymers von einem oder mehreren säureenthaltenden Monomeren;
(d) 0 bis 10 Gew.-% des Emulsionspolymers von einem oder mehreren anderen copolymerisierbaren Monomeren;
wobei die Gesamtmenge der Monomere gleich 100 Prozent ist.

4. Keramischer Grünkörper, umfassend:

(1) keramische Teilchen und
(2) mindestens 0,5 bis 10 Gew.-%, basierend auf dem Gewicht der keramischen Teilchen, von einem oder mehreren Emulsionspolymeren, dadurch gekennzeichnet, daß das eine oder die mehreren Emulsionspolymere ausgewählt sind aus der Gruppe, bestehend aus:

(i) Emulsionspolymeren mit einer Tg von 20°C bis 50°C, umfassend als polymerisierte Einheiten:

(a) 20 bis 45 Gew.-% des Emulsionspolymers von einem oder mehreren (Meth)acrylatestermonomeren;
(b) 55 bis 80 Gew.-% des Emulsionspolymers von einem oder mehreren aromatischen Vinyl- oder Vinyliden-Monomeren;
(c) 0 bis 10 Gew.-% des Emulsionspolymers von einem oder mehreren säureenthaltenden Monomeren;
(d) 0 bis 10 Gew.-% des Emulsionspolymers von einem oder mehreren anderen copolymerisierbaren Monomeren;
wobei die Gesamtmenge der Monomere gleich 100 Prozent ist, und

(ii) Emulsionspolymeren mit einer Tg von 40°C bis 55°C und umfassend als polymerisierte Einheiten:

(a) 65 bis 95 Gew.- % des Emulsionspolymers von einem oder mehreren (Meth)acrylatestermonome-

13

ren;
(b) 0 bis 10 Gew.-% des Emulsionspolymers von einem oder mehreren aromatischen Vinyl- oder Vinyliden-Monomeren;
(c) 0 bis 15 Gew.-% des Emulsionspolymers von einem oder mehreren säureenthaltenden Monomeren;
(d) 0 bis 10 Gew.-% des Emulsionspolymers von einem oder mehreren anderen copolymerisierbaren Monomeren;
wobei die Gesamtmenge der Monomere gleich 100 Prozent ist.

5. Verfahren zum Herstellen eines gesinterten keramischen Produkts, umfassend:

(I) Erhitzen eines keramischen Grünkörpers nach Anspruch 4 auf eine hohe Temperatur von mindestens 800°C, vorzugsweise mindestens 1000°C; und
(II) Halten der hohen Temperatur für mindestens 10 Minuten zur Herstellung eines gesinterten keramischen Produkts.

6. Wäßrige keramische Aufschlämmung nach Anspruch 1, ein Verfahren nach Anspruch 2 oder Anspruch 5, ein getrocknetes keramisches Gemisch nach Anspruch 3 oder ein keramischer Grünkörper nach Anspruch 4, wobei die keramischen Teilchen Teilchen von Aluminiumoxid, Aluminiumnitrid, Siliziumdioxid, Silizium, Siliziumcarbid, Siliziumnitrid, Sialon, Zirconiumoxid, Zirconiumnitrid, Zirconiumcarbid, Zirconiumborid, Titanoxid, Titannitrid, Titancarbid, Bariumtitanat, Titanborid, Bornitrid, Borcarbid, Wolframcarbid, Wolframborid und Oxide von Zinn, Blei, Ruthenium, Wolfram, Yttrium, Nickel, Magnesium, Calcium und Gemischen von zwei oder mehreren solcher Materialien darstellen.

7. Wäßrige keramische Aufschlämmung nach Anspruch 1, ein Verfahren nach Anspruch 2 oder Anspruch 5, ein getrocknetes keramisches Gemisch nach Anspruch 3 oder ein keramischer Grünkörper nach Anspruch 4, wobei das/die Emulsionspolymer(e) ein gewichtsmittleres Molekulargewicht von 30000 bis 300000 aufweist/aufweisen.

8. Wäßrige keramische Aufschlämmung nach Anspruch 1, ein Verfahren nach Anspruch 2 oder Anspruch 5, ein getrocknetes keramisches Gemisch nach Anspruch 3 oder ein keramischer Grünkörper nach Anspruch 4, wobei das/die Emulsionspolymer(e) eine Teilchengröße von 30 Nanometern bis 225 Nanometern aufweist/aufweisen.

**Revendications**

1. Pâte céramique aqueuse qui comprend :

(1) de 10 à 90 pour-cent en poids de particules de céramique, sur la base du poids combiné des particules de céramique et de l'eau ;
(2) de 90 à 10 pour-cent en poids d'eau, sur la base du poids combiné des particules de céramique et de l'eau ; et
(3) de au moins 0,5 à 10 pour-cent en poids, sur la base du poids des particules de céramique d'un ou de plusieurs polymères en émulsion, caractérisée en ce que le ou les polymère(s) en émulsion est/sont sélectionné(s) parmi le groupe composé de :

(i) polymères en émulsion présentant une température de transition vitreuse (Tg) comprise entre 20 °C et 50 °C et comprenant en tant que motifs polymérisés :

(a) de 20 à environ 45 pour-cent en poids du polymère en émulsion d'un ou de plusieurs monomères d'ester de (méth)acrylate ;
(b) de 55 à 80 pour-cent en poids du polymère en émulsion d'un ou de plusieurs monomères aromatiques de vinyle ou de vinylidène ;
(c) de 0 à 10 pour-cent en poids du polymère en émulsion d'un ou de plusieurs monomères contenant un acide ;
(d) de 0 à 10 pour-cent en poids du polymère en émulsion d'un ou de plusieurs autres monomères copolymérisables ;
la quantité totale des monomères représentant 100 pour-cent ;

et de

(ii) polymères en émulsion présentant une température de transition vitreuse (Tg) comprise entre 40 °C et 55 °C et comprenant en tant que motifs polymérisés

(a) de 65 à 95 pour-cent en poids du polymère en émulsion d'un ou de plusieurs monomères d'ester de (méth)acrylate ;
(b) de 0 à 10 pour-cent en poids du polymère en émulsion d'un ou de plusieurs monomères aromatiques de vinyle ou de vinylidène ;
(c) de 0 à 15 pour-cent en poids du polymère en émulsion d'un ou de plusieurs monomères contenant un acide ;
(d) de 0 à 10 pour-cent en poids du polymère en émulsion d'un ou de plusieurs autres monomères copolymérisables ;
la quantité totale des momomères représentant 100 pour-cent.

2. Procédé de préparation de corps verts céramiques, qui comprend les étapes consistant à :

(I) former une pâte céramique aqueuse telle que définie dans la revendication 1 ;
(II) sécher la pâte céramique aqueuse pour former un mélange céramique séché ;
(III) et compacter le mélange céramique séché à une pression élevée au moins égale à 6,895 M Pa (1 000 psi) pour former un corps vert céramique.

3. Mélange céramique séché, qui comprend :

(1) des particules de céramique ; et
(2) de au moins 0,5 à 10 pour-cent en poids sur la base du poids des particules de céramique, d'un ou de plusieurs polymères en émulsion, caractérisé en ce que le ou les polymère(s) en émulsion est/sont sélectionné(s) parmi le groupe composé de :

(i) polymères en émulsion présentant une température de transition vitreuse (Tg) comprise entre 20 °C et 50 °C et comprenant, en tant que motifs polymérisés

(a) de 20 à 45 pour-cent en poids du polymère en émulsion d'un ou de plusieurs monomères d'ester de (méth)acrylate ;
(b) de 55 à 80 pour-cent en poids du polymère en émulsion d'un ou de plusieurs monomères aromatiques de vinyle ou de vinylidène ;
(c) de 0 à 10 pour-cent en poids du polymère en émulsion d'un ou de plusieurs monomères contenant un acide ;
(d) de 0 à 10 pour-cent en poids du polymère en émulsion d'un ou de plusieurs autres monomères copolymérisables ;
la quantité totale des monomères représentant 100 pour-cent ;

et de
(ii) polymères en émulsion présentant une température de transition vitreuse (Tg) comprise entre 40 °C et environ 55 °C et comprenant, en tant que motifs polymérisés

(a) de 65 à 95 pour-cent en poids du polymère en émulsion d'un ou de plusieurs monomères d'ester de (meth)acrylate ;
(b) de 0 à 10 pour-cent en poids du polymère en émulsion d'un ou de plusieurs monomères aromatiques de vinyle ou de vinylidène ;
(c) de 0 à 15 pour-cent en poids du polymère en émulsion d'un ou de plusieurs monomères contenant un acide ;
(d) de 0 à 10 pour-cent en poids du polymère en émulsion d'un ou de plusieurs autres monomères copolymérisables ;
la quantité totale des monomères représentant 100 pour-cent.

4. Corps vert céramique qui comprend :

(1) des particules de céramique ; et
(2) de au moins 0,5 à 10 pour-cent en poids, sur la base du poids des particules de céramique d'un on de plusieurs polymères en émulsion, caractérisé en ce que le ou les polymère(s) en émulsion est/sont sélectionné(s) parmi le groupe composé de ;

(i) polymères en émulsion présentant une température de transition vitreuse (Tg) comprise entre 20 °C et 50 °C et comprenant, en tant que motifs polymérisés :

(a) de 20 à 45 pour-cent en poids du polymère en émulsion d'un ou de plusieurs monomères d'ester de(méth)acrylate ;
(b) de 55 à 80 pour-cent en poids du polymère en émulsion d'un ou de plusieurs monomères aromatiques de vinyle ou de vinylidène ;
(c) de 0 à 10 pour-cent en poids du polymère en émulsion d'un ou de plusieurs monomères contenant un acide ;
(d) de 0 à 10 pour-cent en poids du polymère en émulsion d'un ou de plusieurs autres monomères copolymérisables :
la quantité totale des monomères représentant 100 pour-cent ;

et de
(ii) polymères en émulsion présentant une température de transition vitreuse (Tg) comprise entre 40 °C et 55 °C et comprenant, en tant que motifs polymérisés :

(a) de 65 à 95 pour-cent en poids du polymère en émulsion d'un ou de plusieurs monomères d'ester de (méth)acrylate
(b) de 0 à 10 pour-cent en poids du polymère en émulsion d'un ou de plusieurs monomères aromatiques de vinyle ou de vinylidène ;
(c) de 0 à 15 pour-cent en poids du polymère en émulsion d'un ou de plusieurs monomères contenant un acide ;
(d) de 0 à 10 pour-cent en poids du polymère en émulsion d'un ou de plusieurs autres monomères copolymérisables ;
la quantité totale des monomères représentant 100 pour-cent.

5.  Procédé de préparation d'un produit céramique fritté, qui comprend les étapes consistant à :

(I) chauffer à une température élevée au moins égale à 800 °C, de préférence au moins égale à 1 000 °C, un corps vert céramique tel que revendiqué dans la revendication 4 ; et
(II) maintenir la température élevée pendant au moins 10 minutes pour former un produit céramique fritté.

6.  Pâte céramique aqueuse telle que revendiquée dans la revendication 1, procédé tel que revendiqué dans la revendication 2 ou la revendication 5, mélange céramique séché tel que revendiqué dans la revendication 3 ou corps vert céramique tel que revendiqué dans la revendication 4, dans lequel les particules de céramique sont des particules d'alumine, de nitrure d'aluminium, de silice, de silicium, de carbure de silicium, de nitrure de silicium, de sialone, de zircone, de nitrure de zirconium, de carbure de zirconium, de borure de zirconium, d'oxyde de titane, de nitrure de titane, de carbure de titane, de titanate de baryum, de borure de titane; de nitrure de bore de carbure de bore, de carbure de tungstène, de borure de tungstène, et d'oxydes d'étain, de plomb, de ruthénium, de tungstène, d'yttrium, de nickel, de magnésium, de calcium, et de mélanges de deux de ces matériaux ou plus.

7.  Pâte céramique aqueuse telle que revendiquée dans la revendication 1, procédé tel que revendiqué dans la revendication 2 ou la revendication 5, mélange céramique séché tel que revendiqué dans la revendication 3 ou corps vert céramique tel que revendiqué dans la revendication 4, dans lequel le(s) polymère(s) en émulsion possède(nt) un poids moléculaire moyen compris entre 30 000 et 300 000.

8.  Pâte céramique aqueuse telle que revendiquée dans la revendication 1, procédé tel que revendiqué dans la revendication 2 ou la revendication 5, mélange céramique séché tel que revendiqué dans le revendication 3 ou corps vert céramique tel que revendiqué dans la revendication 4, dans lequel le(s) polymère(s) en émulsion possède(nt) une taille de particules comprise entre 30 nanomètres et 225 nanomètres.